# EUROPÄISCHE PATENTSCHRIFT

(11) **EP 1 778 528 B1**
(45) Veröffentlichungstag und Bekanntmachung des Hinweises auf die Patenterteilung: **31.10.2012**
(21) Anmeldenummer: 05767903.7
(22) Anmeldetag: 07.07.2005
(51) Int. Cl.: B60T 13/66

(54) **STEUERSYSTEM FÜR DIE FESTSTELLBREMSE EINER BREMSANLAGE EINES KRAFTFAHRZEUGES**
CONTROL SYSTEM FOR THE PARKING BRAKE OF A BRAKE SYSTEM IN A MOTOR VEHICLE
SYSTEME DE COMMANDE DE FREIN DE STATIONNEMENT D'UNE INSTALLATION DE FREINAGE SUR UN VEHICULE A MOTEUR

(30) Priorität: 17.08.2004 DE 102004039866
(43) Veröffentlichungstag der Anmeldung: 02.05.2007
(73) Patentinhaber: Continental Automotive GmbH, 30165 Hannover (DE)
(72) Erfinder: MOLFETTA, Damiano, 8620 Wetzikon (CH); GOSS, Stefan, 93164 Brunn (DE); KALBECK, Alexander, 93133 Burglengenfeld (DE)
(86) Internationale Anmeldenummer: PCT/EP2005/053257
(87) Internationale Veröffentlichungsnummer: WO 2006/018354

(56) Entgegenhaltungen:
- DE-A1- 3 719 683
- DE-A1- 19 814 657
- US-A- 4 821 854
- US-A1- 2004 026 988

## Beschreibung

Die vorliegende Erfindung betrifft ein System zum Steuern einer Feststellbremse einer Bremsanlage eines Kraftfahrzeugs, wobei mittels eines Bedienelements ein erster Sollwert der Bremskraft für die Feststellbremse vorgegeben wird, und wobei mittels eines Bedienelements die Bremskraft für die Feststellbremse lösbar ist.

Bei Bremssystemen in Kraftfahrzeugen mit automatischen Funktionen zur Unterstützung der Anfahrt wie beispielsweise selbstständiges Lösen der angezogenen Feststellbremse bzw. Parkbremse bei der Anfahrt, kann es zu Komfortproblemen insb. während der Anfahrt des Fahrzeugs kommen, da die Zeit zum Lösen der Feststellbremse einen maßgeblichen Einfluss auf die Dynamik des Fahrzeugs besitzt. Insbesondere bei elektrischen Parkbremsen, die durch eine Elektromotor-Getriebeeinheit gesteuert werden, ist die Dauer des Lösevorgangs von der im angezogenen Zustand angelegten Kraft bzw. des zu bewegenden weges der Bremsmechanik abhängig.

Die Lösedauer beispielsweise für eine angezogene elektrische Parkbremse mit mechanischem Bremssystem beträgt in der Gröbenordnung etwa eine Sekunde (1 s) bzw. mehrere 100 ms. Bei einem schnellen Anfahrtmanöver kann die Zeit von der Signalisierung des Anfahrtswunschs des Fahrers bis zur Bewegung des Fahrzeugs jedoch deutlich geringer liegen.

Der Unterschied in diesen Zeiten kann dazu führen, dass zum Zeitpunkt der erwarteten Bewegung des Fahrzeugs noch immer ein solch hohes Bremsmoment anliegt, dass das Fahrzeug an der gewünschten Bewegung unnötig gehemmt wird und/oder unerwünschte Komfortprobleme (wie z.B. "Ruckeln" bei der Anfahrt) auftreten.

Bei einigen bisherigen Bremssystemen treten diese Probleme vermindert auf, wenn die Anfahrfunktionen durch ein teures, schnelles hydraulisches System (z.B. ESP) durchgeführt werden, oder die dort verwendeten Bremsmechaniken keine größeren dynamische Effekte diesbezüglich zeigen.

Zwecks vermeidung eines erhöhten Verschleißes der Bremsanlage eines Kraftfahrzeuges ist zudem aus der gattungsgemäßen DE 198 14 657 A1 oder der DE 100 61 064 B4 bekannt, die Bremskraft in Abhängigkeit fahrzeugspezifischer Kenngrößen zu wählen.

Der vorliegenden Erfindung liegt die Aufgabe zugrunde, ein verbessertes System zum sicheren und effizienten Steuern einer Feststellbremse bzw. Feststellbremsfunktion einer Bremsanlage eines Kraftfahrzeugs anzugeben, welches insb. die eingangs erwähnten Komfortprobleme bei der Anfahrt eines Kraftfahrzeuges vermeidet.

Diese Aufgabe wird erfindungsgemäß durch die Merkmale des unabhängigen Patentanspruchs 1 gelöst. Vorteilhafte Ausgestaltungen und Weiterbildungen, welche einzeln oder in Kombination miteinander eingesetzt werden können, sind Gegenstand der abhängigen Ansprüche.

Die Erfindung baut auf gattungsgemäßen Systemen zum Steuern einer Feststellbremse einer Bremsanlage eines Kraftfahrzeuges dadurch auf, dass das Steuersystem bei Detektion eines Anfahrwunsches die Bremskraft der Feststellbremse durch vorlösen, d.h. die an der Feststellbremse anliegenden Kraft, in Abhängigkeit von Umbebungsbedingungen des Kraftfahrzeuges gegenüber dem ersten Sollwert minimiert. Dadurch vermindert sich in vorteilhafter Weise die später zum Lösen notwendige Zeit, was die eingangs erwähnten Komfortprobleme bei der Anfahrt eines Kraftfahrzeuges vorteilhaft vermeidet.

Als Interpretation eines Anfahrwunschs haben sich vorzugsweise insbesondere die Detektion einer Person, insbesondere eines (ggf. autorisierten) Fahrers, auf dem Fahrersitz, das Starten des Motors, das Bedienen der Kupplung bzw. eines anderen Fahrerpedals und/oder das Einlegen eines Gangs bzw. einer Fahrstufe bewährt.

Als Umgebungsbedingungen des Kraftfahrzeuges werden bevorzugt insbesondere dessen Neigung, dessen Beladung, der Reifendruck, die Umgebungstemperatur, der Verschleiß und/oder die Alterung bzw. Veränderungen der Bremsanlage bzw. deren Komponenten wie zuleitungen, Kabel, Bremsbelege, Aktuatorik, etc., detektiert.

Erfindungsgemäß bevorzugt wird bei Detektion eines Abbruchs eines Anfahrwunsches wieder der erste Sollwert der Bremskraft für die Feststellbremse vorgegeben, wobei als Interpretation des Abbruchs eines Anfahrwunsches vorzugsweise insbesondere die Detektion eines unbelegten Fahrersitzes, das Ausschalten des Motors, das Herausnehmen eines Gangs bzw. einer Fahrstufe und/oder bestimmte Pedalkombinationen herangezogen werden können.

Zweckmäßiger Weise entspricht der erste Sollwert der Bremskraft dem maximalen Sollwert, d.h. dem Standard- oder (aktuellen) Betriebssollwert, zur Vorgabe der Bremskraft für die Feststellbremse.

Alternativ oder kumulativ hierzu kann der erste Sollwert der Bremskraft einem Startwert entsprechen, wobei bevorzugt in einem bestimmten Zeitabstand Messvorgänge zur Ermittlung von Messwerten der Umgebungsbedingen des Kraftfahrzeuges durchgeführt werden, und wobei anhand der Messwerte ein aktueller, gegenüber dem ersten Sollwert verminderter - jedoch nicht minimierter - Sollwert zur Vorgabe der Bremskraft für die Feststellbremse bestimmt wird.

Vorzugsweise sind die Sollwerte für die minimierte bzw. reduzierte Bremskraft in einem Kennfeld, einer Kennlinie und/oder einer Tabelle gespeichert.

Darüber hinaus kann vorgesehen sein, die gespeicherten Sollwerte für die Bremskraft anhand der in den Messvorgängen bestimmten aktuellen Sollwerte anzupassen.

Die vorliegende Erfindung erlaubt erstmals mittels einer "vorausschauenden" Minimierung der Bremskraft während einer detektierten möglichen / potentiellen Anfahrsituation eine tatsächliche Anfahrsituation ohne Sicherheitsverluste so komfortabel wie möglich zu gestalten. In diesem Zusammenhang wird unter einer möglichen Anfahrsituation die physikalischtechnische Möglichkeit des Anfahrens (Motor läuft, Gang eingelegt, etc....) verstanden. Demgegenüber ist die potentielle Anfahrsituation durch messbare Größen definiert, welche auf den wunsch des Fahrers gerichtet sind (dessen Anwesenheit, Pedalaktionen, etc....). Schließlich ist die tatsächliche Anfahrsituation durch die Umsetzung des möglichen / potentiellen Anfahrwunsches (Gas geben, Kupplung kommen lassen, etc....) definiert.

Zusätzliche Einzelheiten und weitere Vorteile der Erfindung werden nachfolgend an Hand eines bevorzugten Ausführungsbeispieles in Verbindung mit der beigefügten Zeichnung beschrieben.

Darin zeigen schematisch:
- Fig. 1: das Flussdiagramm eines abstrahiertes Steuerprogramm eines Steuersystems nach der Erfindung; und
- Fig. 2: dass Flussdiagramm nach Fig. 1 in einer detaillierteren Ausführung.

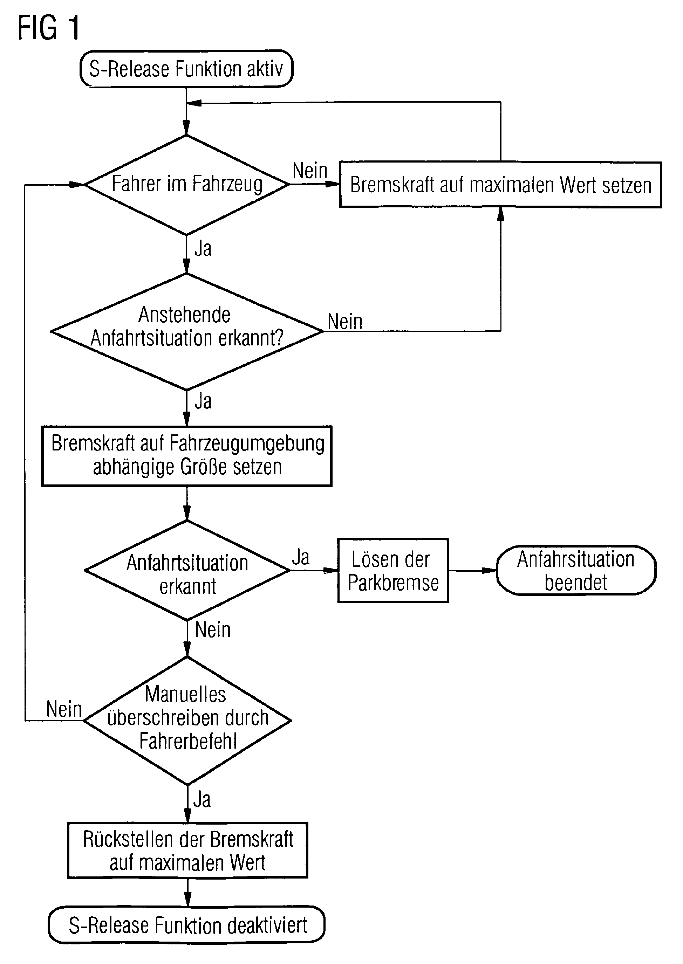

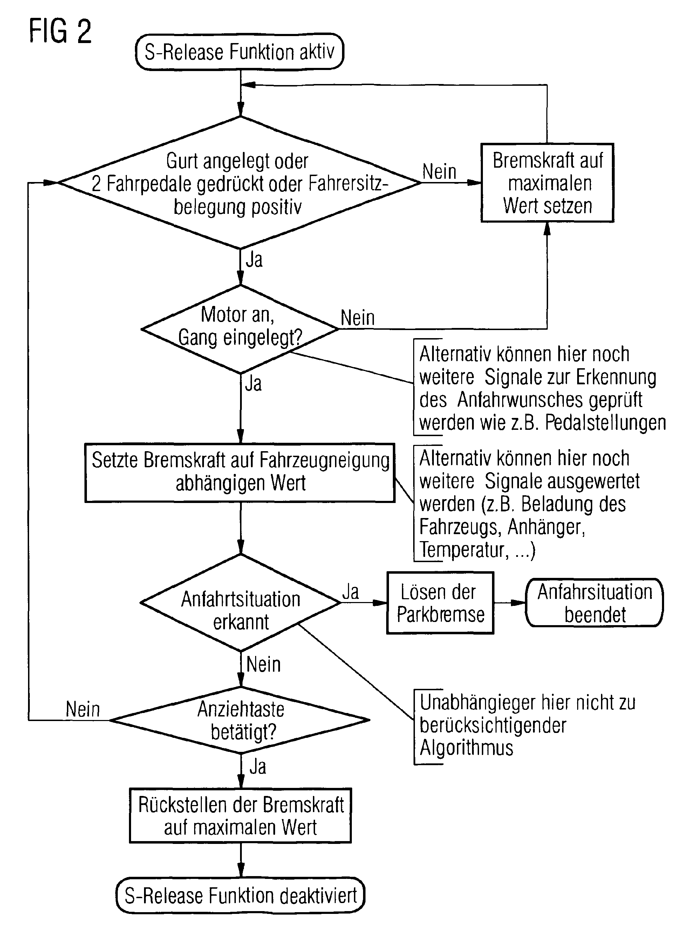

Wie Fig. 1 und 2 zeigen, fußt die vorliegende Erfindung auf dem Gedanken, bei einer durch eine elektronische Steuerung bzw. Regelung einer Bremsvorrichtung erkannten möglichen /potentiellen Vorbereitung zum Anfahren eines Kraftfahrzeugs die Bremskraft z.B einer Feststellbremse soweit zu verringern bzw. vorzulösen, dass diese (idealer Weise "gerade noch") den Umgebungsbedingungen des Fahrzeugs genügt, um dieses in der aktuellen Position sicher zu halten - was einem minimalen Sollwert zur Vorgabe der Bremskraft für die Feststellbremse entspricht. Demgegenüber wird beim Anziehvorgang der Feststellbremse beispielsweise die maximale, d.h. ein Standard- bzw. (aktueller) Betriebssollwert, oder zumindest eine signifikant über dem minimalen Sollwert liegende Bremskraft eingestellt.

wird nun im Vorfeld des Anfahrens mittels Überwachung bzw. Detektion verschiedener Fahrzeugsignale (wie z.B. Kupplung, Fahrstufe eingelegt, Gang eingelegt, Fahrer anwesend, Fahrer angeschnallt, etc....) ein zu erwartendes Anfahren - auch als möglicher / potentieller Anfahrwunsch bezeichnet - detektiert, so wird automatisch die aktuell anliegende Bremskraft bzw. das dazu korrespondierende Bremsmoment des Bremssystems soweit vermindert, bis es dem minimal benötigten, den Umgebungsbedingung des Fahrzeugs angepassten, Bremsmoment entspricht, das benötigt wird, um das Fahrzeug zuverlässig - ggf. mit einer gewissen Sicherheit beaufschlagt - in einer aktuellen Position zu halten. Dadurch vermindern sich bei der eigentlichen Anfahrt vorteilhaft der zum Lösen notwendige Aktuatorweg bzw. Bremskomponentenweg und damit die zum Lösen notwendige Zeit, so dass Komfortprobleme vorteilhaft vermieden werden.

Wird vor dem Anfahren erkannt, dass der mögliche / potentielle Anfahrwunsch nicht mehr vorhanden ist (z.B. kein Gang mehr eingelegt oder Fahrer nicht anwesend, etc....) so wird automatisch das Bremsmoment wieder auf den ersten, z.B. maximalen, Wert erhöht.

Bevorzugter Weise soll es dem Fahrer zusätzlich gestattet sein, während einer - wie zuvor beschrieben - aktiv gesetzten Funktion, durch eine manuelle Bedienung eines Bedienelements, beispielsweise durch Betätigung des üblichen Anzieh-Tasters, eine erhöhte bzw. die volle Bremskraft wiederherzustellen. Dadurch wird gleichzeitig die Funktion der vorzeitigen Minimierung der Bremskraft (S-Release), zumindest temporär, deaktiviert.

Ein anschließender zu definierender Vorgang oder Ereignis (z.B. Aktuator / Bremse gelöst oder Zündung aus oder Bedienung eines ausgezeichneten Elements, Änderung der initialen S-Release Bedingungen, ...) soll die Funktion S-Release wiederum in zuvor genannten Umfang aktivieren.

Die vorliegende Erfindung hat zum Vorteil, dass die Bremswirkung im Fall, dass kein möglicher / potentieller Anfahrwunsch vorliegt oder der Fahrer das Fahrzeug verlässt oder er diese anfordert, die Bremswirkung der Feststellbremse immer automatisch beispielsweise maximal ist und somit sicherheitskritische Fälle, bei denen ein vermindertes Bremsmoment evtl. nicht ausreicht das Fahrzeug stabil zu halten (beladen eines Fahrzeugs am Hang, Verringerung des Bremsmoments durch mechanische Eigenschaften über längere Zeitdauer, etc. ...), vorteilhaft ohne zutun des Fahrers vermieden werden. Dadurch erhöht sich die Sicherheit des automatischen Bremssystems ohne dass der Komfort des Anfahrens, verglichen mit aus dem Stand der Technik bekannten Systemen wie eingangs beschrieben, vermindert wird.

Die vorliegende Erfindung gestattet erstmals eine vorläufige Minimierung der Bremskraft einer Feststellbremse bei einer voraussehbaren Anfahrsituation, die es erlaubt, bei maximaler Sicherheit der automatischen Funktion, den Anfahrvorgang eines Kraftfahrzeuges so komfortabel wie möglich zu gestalten. Sie eignet sich insbesondere für elektromechanische Park- bzw. Feststellbremsen.

## Patentansprüche

1. Elektromechanisches Feststellbremssystem mit wenigstens einem Aktuator einer Feststellbremse einer Bremsanlage eines Kraftfahrzeugs, wobei
- mittels eines Bedienelements ein erster Sollwert der Bremskraft für die Feststellbremse vorgegeben wird, und wobei
- mittels eines Bedienelements die Bremskraft für die Feststellbremse lösbar ist, und wobei das Steuersystem bei Detektion eines Anfahrwunsches die Bremskraft der Feststellbremse durch vorlösen in Abhängigkeit von Umgebungsbedingungen des Kraftfahrzeuges gegenüber dem ersten Sollwert minimiert, um das Kraftfahrzeug in der aktuellen Position sicher zu halten.

2. Elektromechanisches Feststellbremssystem nach Anspruch 1, **dadurch gekennzeichnet, dass** die Detektion einer Person auf dem Fahrersitz, das Starten des Motors, das Bedienen der Kupplung bzw. eines anderen Fahrerpedals und/oder das Einlegen eines Gangs bzw. einer Fahrstufe als Anfahrwunsch interpretiert werden.

3. Elektromechanisches Feststellbremssystem nach Anspruch 1 oder 2, **dadurch gekennzeichnet, dass** als Umgebungsbedingungen des Kraftfahrzeuges dessen Neigung, dessen Beladung, der Reifendruck, die Umgebungstemperatur, der Verschleiß und/oder die Alterung bzw. Veränderungen der Bremsanlage bzw. deren Komponenten detektiert werden.

4. Elektromechanisches Feststellbremssystem nach einem der vorherigen Ansprüche, **dadurch gekennzeichnet, dass** bei Detektion eines Abbruchs eines Anfahrwunsches wieder der erste Sollwert der Bremskraft für die Feststellbremse vorgegeben wird.

5. Elektromechanisches Feststellbremssystem nach Anspruch 4, **dadurch gekennzeichnet, dass** die Detektion eines unbelegten Fahrersitzes, das Ausschalten des Motors, das Herausnehmen eines Gangs bzw. einer Fahrstufe und/oder bestimmte Pedalkombinationen als Abbruch eines Anfahrwunsches interpretiert werden.

6. Elektromechanisches Feststellbremssystem nach einem der vorherigen Ansprüche, **dadurch gekennzeichnet, dass** der erster Sollwert des Bremskraft dem maximalen Sollwert zur Vorgabe der Bremskraft für die Feststellbremse entspricht.

7. Elektromechanisches Feststellbremssystem nach einem der vorherigen Ansprüche, **dadurch gekennzeichnet, dass** der erste Sollwert der Bremskraft einem Startwert entspricht, wobei in einem bestimmten Zeitabstand Messvorgänge zur Ermittlung von Messwerten der Umgebungsbedingen des Kraftfahrzeuges durchgeführt werden, und wobei anhand der Messwerte ein aktueller, gegenüber dem ersten Sollwert verminderter Sollwert zur Vorgabe der Bremskraft für die Feststellbremse bestimmt wird.

8. Elektromechanisches Feststellbremssystem nach einem der vorherigen Ansprüche, **dadurch gekennzeichnet, dass** die Sollwerte der minimierten bzw. reduzierten Bremskraft in einem Kennfeld, einer Kennlinie und/oder einer Tabelle gespeichert sind.

9. Elektromechanisches Feststellbremssystem nach Anspruch 8, **dadurch gekennzeichnet, dass** die gespeicherten Sollwerte für die Bremskraft anhand der in den Messvorgängen bestimmten aktuellen Sollwerte angepasst werden.

## Claims

1. Electromechanical parking brake system with at least one actuator of a parking brake of a brake system of a motor vehicle, wherein
- a first target value for the braking force of the parking brake is predetermined by means of a control element, and wherein
- the braking force for the parking brake can be released by means of a control element, and wherein
the control system, on detection of a start-up intention, minimises the braking force of the parking brake by prerelease in relation to the first target value, as a function of ambient conditions of the motor vehicle, in order to safely hold the motor vehicle in the current position.

2. Electromechanical parking brake system according to claim 1, **characterised in that** the detection of a person on the driver's seat, the starting of the engine, the actuating of the clutch or another driver pedal and/or the engaging of a gear or an automatic gearshift phase are interpreted as a start-up intention.

3. Electromechanical parking brake system according to claim 1 or 2, **characterised in that** its inclination, its load, its tire pressure, its ambient temperature, the wear and tear and/or the ageing or the changes in the brake system or in its components are detected as the ambient conditions of the motor vehicle.

4. Electromechanical parking brake system according to one of the preceding claims, **characterised in that**, on the detection of a discontinuation of a start-up intention, the first target value is again predefined for the braking force of the parking brake.

5. Electromechanical parking brake system according to claim 4, **characterised in that** the detection of an unoccupied driver's seat, the turning off of the engine, the disengaging of a gear or a transmission setting and/or specific pedal combinations are interpreted as the discontinuation of a start-up intention.

6. Electromechanical parking brake system according to one of the preceding claims, **characterised in that** a first target value for the braking force corresponds to a maximum target value for predetermining the braking force for the parking brake.

7. Electromechanical parking brake system according to one of the preceding claims, **characterised in that** the first target value for the braking force corresponds to a start value, with measuring processes being performed at a specific time interval to determine the measured values of the ambient conditions of the motor vehicle, and with a current target value reduced in relation to the first target value being determined for predetermining the braking force for the parking brake with the aid of the measured values.

8. Electromechanical parking brake system according to one of the preceding claims, **characterised in that** the target values for the minimised or the reduced braking force are stored in a performance graph, in a characteristic curve and/or in a table.

9. Electromechanical parking brake system according to claim 8, **characterised in that** the stored target values for the braking force are adapted on the basis of the current target values determined in the measuring processes.

## Revendications

1. Système de frein d'arrêt électromécanique comprenant au moins un actionneur d'un frein d'arrêt d'une installation de freinage d'un véhicule automobile, dans lequel :
- une première valeur de consigne de la force de freinage est réglée pour le frein d'arrêt au moyen d'un élément de contrôle, et dans lequel :
- la force de freinage peut être relâchée pour le frein d'arrêt au moyen d'un élément de contrôle, et dans lequel : le système de commande, en cas de détection d'une volonté de démarrage, minimise la force de freinage du frein d'arrêt par rapport à la première valeur de consigne par le biais d'un relâchement préalable en fonction des conditions d'environnement du véhicule automobile afin de maintenir le véhicule automobile en sécurité dans la position effective.

2. Système de frein d'arrêt électromécanique selon la revendication 1, **caractérisé en ce que** la détection d'une personne sur le siège du conducteur, la mise en marche du moteur, l'actionnement de l'embrayage ou d'une autre pédale du conducteur et/ou l'enclenchement d'un rapport ou d'une vitesse sont interprétés comme une volonté de démarrage.

3. Système de frein d'arrêt électromécanique selon la revendication 1 ou 2, **caractérisé en ce qu'**en tant que conditions d'environnement du véhicule automobile, son inclinaison, son chargement, la pression des pneus, la température ambiante, l'usure et/ou le vieillissement ou les modifications de l'installation de freinage ou de ses composants sont détectés.

4. Système de frein d'arrêt électromécanique selon l'une quelconque des revendications précédentes, **caractérisé en ce qu'**en cas de détection d'une interruption de la volonté de démarrage, la première valeur de consigne de la force de freinage est à nouveau réglée pour le frein d'arrêt.

5. Système de frein d'arrêt électromécanique selon la revendication 4, **caractérisé en ce que** la détection d'un siège du conducteur inoccupé, l'arrêt du moteur, le désengagement d'un rapport ou d'une vitesse et/ou des combinaisons de pédales déterminées sont interprétées comme une interruption de la volonté de démarrage.

6. Système de frein d'arrêt électromécanique selon l'une quelconque des revendications précédentes, **caractérisé en ce que** la première valeur de consigne de la force de freinage correspond à la valeur de consigne maximale relative au réglage de la force de freinage pour le frein d'arrêt.

7. Système de frein d'arrêt électromécanique selon l'une quelconque des revendications précédentes, **caractérisé en ce que** la première valeur de consigne de la force de freinage correspond à une valeur de démarrage, étant entendu que dans un intervalle de temps déterminé, des opérations de mesure sont réalisées afin de calculer des valeurs de mesure des conditions d'environnement du véhicule automobile et étant entendu que sur la base des valeurs de mesure, une valeur de consigne effective réduite par rapport à la première valeur de consigne est déterminée en vue du réglage de la force de freinage pour le frein d'arrêt.

8. Système de frein d'arrêt électromécanique selon l'une quelconque des revendications précédentes, **caractérisé en ce que** les valeurs de consigne de la force de freinage minimisée ou réduite sont enregistrées dans un diagramme caractéristique, une courbe caractéristique et/ou un tableau.

9. Système de frein d'arrêt électromécanique selon la revendication 8, **caractérisé en ce que** les valeurs de consigne enregistrées pour la force de freinage sont adaptées sur la base des valeurs de consigne effectives déterminées dans les opérations de mesure.
